# EUROPÄISCHE PATENTSCHRIFT

(11) **EP 1 339 253 B1**
(45) Veröffentlichungstag und Bekanntmachung des Hinweises auf die Patenterteilung: **17.05.2017**
(21) Anmeldenummer: 03100288.4
(22) Anmeldetag: 11.02.2003
(51) Int. Cl.: H04M 1/673, H04W 12/06

(54) **Tragbares Kommunikationsgerät und Verfahren zum Betreiben desselben**
Portable communcation device and method for operating it
Appareil de communication portable et procédé de son utilisation

(30) Priorität: 25.02.2002 DE 10207978
(43) Veröffentlichungstag der Anmeldung: 27.08.2003
(73) Patentinhaber: QUALCOMM Incorporated, San Diego, CA 92121-1714 (US)
(72) Erfinder: Neumann, Peter, 81739, München (DE)
(74) Vertreter: Dunlop, Hugh Christopher

(56) Entgegenhaltungen:
- DE-A1- 19 645 937
- US-A1- 2001 034 247
- SOSINSKY, B: "Laptop Users love Win2K"[Online] September 2000 (2000-09), XP002360844 Gefunden im Internet: URL:http://ww.windowsitpro.com/Articles/Ar ticleID/9657/9657.html> [gefunden am 2005-05-18]

## Beschreibung

Die vorliegende Erfindung betrifft ein tragbares Kommunikationsgerät, insbesondere ein Mobilfunkgerät, sowie ein Verfahren zum Betreiben desselben. Dabei betrifft die vorliegende Erfindung insbesondere ein tragbares Kommunikationsgerät, das mittels einer Aktivierungseinrichtung, wie einer Einschalttaste, in einen Bereitschaftszustand versetzbar ist, der zur Eingabe eines oder mehrerer Authentifizierungsmerkmale des Benutzers des tragbaren Kommunikationsgeräts dient.

Ein herkömmliches Kommunikationsgerät in Form eines Mobilfunkgeräts bzw. Mobiltelefons, insbesondere gemäß dem GSM (Global System For Mobile Communications)-Standard, weist zur Identifizierung oder Authentifizierung des rechtmäßigen Benutzers eine benutzerspezifische Karte, eine sogenannte SIM (SIM: Subscriber Identity Module = Teilnehmeridentitätsmodul)-Karte, auf, der ein bestimmter Code, die PIN (PIN: Personal Identification Number = persönliche Identifikations-Nummer), zugeordnet ist. Zum Versetzen des Mobilfunkgeräts in einen Betriebszustand, in dem beispielsweise ein Telefonieren usw. möglich ist, muss das Mobilfunkgerät in einen Bereitschaftszustand versetzt werden, in dem die Stromversorgung des Mobilfunkgeräts aktiviert wird, und in dem gewöhnlicherweise eine Aufforderung erscheint, dass der Benutzer zu seiner Authentifizierung die seiner SIM-Karte zugeordnete PIN eingeben soll. Gibt der Benutzer die korrekte PIN ein und bestätigt gegebenenfalls mit einer "OK"- oder "#"-Taste, so wird das Mobilfunkgerät von dem Bereitschaftszustand in den Betriebszustand versetzt, indem dem Benutzer gestattet wird, die Leistungsmerkmale des Mobilfunkgeräts zu nutzen.

Geht ein Benutzer eines Mobilfunkgeräts beispielsweise auf Reisen, so verstaut er sein Mobilfunkgerät gewöhnlicherweise in einer Tasche seiner Kleidung oder einer Handtasche, in der sich möglicherweise weitere Gegenstande befinden. Durch eine Gehbewegung oder sonstige Bewegungen kann dabei das Mobilfunkgerät entweder mit den in der Tasche befindlichen Gegenstanden oder mit der Tasche selbst in Kontakt treten, wobei es vorkommen kann, dass dabei die Einschalttaste des Mobilfunkgeräts aktiviert wird und somit das Mobilfunkgerät in einen Bereitschaftszustand versetzt wird, indem es den Benutzer auffordert, die korrekte PIN einzugeben. Zur besseren Darstellung der Anzeige bzw. der Tasten zur Eingabe der PIN wird nach Aktivieren des Bereitschaftszustands bzw. bei Drücken einer Taste der Mobilfunkgerättastatur bei vielen Mobilfunkgeräten ferner eine Beleuchtungseinrichtung aktiviert. Bei einer weiteren Bewegung des Mobilfunkgeräts in der Tasche des Benutzers kann es dann auch vorkommen, dass auch die Tasten der Tastatur mit den Gegenstanden in der Tasche oder der Tasche selbst in Berührung kommen, so dass beliebige, meist jedoch sinnlose Tastenkombinationen in einen Zwischenspeicher des Mobilfunkgeräts eingegeben werden. Als nachteilig bei derartigen Mobilfunkgeräten stellt sich jedoch heraus, dass aufgrund der Aktivierung des Bereitschaftszustands, insbesondere in der Ausgestaltung mit aktivierter Beleuchtungseinrichtung, unnötig Strom verbraucht wird, und ferner die Gefahr besteht, dass insbesondere bei Kontaktierung einer der oben erwähnten "OK"- oder "#"-Tasten eine oder mehrere Fehlversuche der Authentifizierung stattfinden, so dass das Mobilfunkgerät nur durch eine übergeordnete PIN oder eine sogenannte Super-PIN wieder freigeschaltet werden kann. Ferner ist es auch möglich, wenn auch eher unwahrscheinlich, dass es zu einer ungewollten korrekten Authentifizierung kommt, wodurch beispielsweise ungewollte Telefonanrufe getätigt werden, die für den Benutzer des Mobilfunkgeräts einen erheblichen finanziellen Schaden bedeuten können.

Die US 2001/034247 A1 offenbart, eine Kommunikationsgerät in einen ausgeschalteten Zustand zu versetzen, wenn eine vorbestimmte Anzahl inkorrekter Passworteingaben erreicht wird.

Es ist somit die Aufgabe der vorliegenden Erfindung, ein tragbares Kommunikationsgerät sowie ein Verfahren zum Betreiben desselben zu schaffen, durch die die Möglichkeit einer ungewollten korrekten Authentifizierung bzw. einer fehlerhaften Authentifizierung minimiert werden.

Diese Aufgabe wird durch ein tragbares Kommunikationsgerät nach einem der unabhängigen Vorrichtungsansprüche sowie durch ein Verfahren zum Betreiben eines tragbaren Kommunikationsgeräts nach einem der unabhängigen Verfahrensansprüche gelöst.

### Vorteilhafte Ausgestaltungen sind Gegenstand der Unteransprüche

Dabei umfasst ein tragbares Kommunikationsgerät gemäß einem ersten Aspekt eine Aktivierungseinrichtung, wie eine Einschalttaste, zum Überführen des tragbaren Kommunikationsgeräts in einen Bereitschaftszustand, der zur Eingabe eines oder mehrerer Authentifizierungsmerkmale eines Benutzers dient. Das tragbare Kommunikationsgerät kann hierbei insbesondere von einem ausgeschalteten Zustand in den Bereitschaftszustand überführt werden, in dem die Stromversorgung des Geräts aktiviert ist, um eine Authentifizierungsprozedur einzuleiten. Ferner weist das tragbare Kommunikationsgerät eine Authentifizierungseinrichtung zum Eingeben des einen oder der mehreren Authentifizierungsmerkmale auf, um das tragbare Kommunikationsgerät in einen Betriebszustand zu bringen, wenn ein korrekter Satz von Authentifizierungsmerkmalen, beispielsweise von der Authentifizierungseinrichtung, erkannt und gegebenenfalls (durch Betätigen einer Bestätigungstaste) bestätigt wird. Außerdem ist eine Zeitmesseinrichtung zum Messen eines Zeitintervalls, das seit der Aktivierung des Bereitschaftszustands verstrichen ist, vorgesehen. Eine Deaktivierungseinrichtung dient dann zum Versetzen des tragbaren Kommunikationsgeräts in einen ausgeschalteten Zustand, wenn nicht innerhalb eines ersten vorbestimmten Zeitintervalls ein korrekter Satz von Authentifizierungsmerkmalen erkannt und gegebenenfalls bestätigt wird. Es sei bemerkt, dass der Satz von Authentifizierungsmerkmalen aus einem oder mehreren korrekten Authentifizierungsmerkmalen bestehen kann. Durch ein derart ausgestaltetes tragbares Kommunikationsgerät wird somit nach Verstreichen des ersten vorbestimmten Zeitintervalls, das beispielsweise im Bereich von 2 bis 6 Minuten liegt, das tragbare Kommunikationsgerät automatisch abgeschaltet, was zum einen einen unnötigen Stromverbrauch verhindert und zum anderen die Gefahr einer ungewollten Authentifizierung bzw. einer fehlerhaften Authentifizierung minimiert. Somit wird zum einen die Batterie des Mobilfunkgeräts bzw. deren Ladezustand geschont, wodurch sich die Betriebszeit des Mobilfunkgeräts erhöht, und zum anderen wird das Mobilfunkgerät nicht durch die zufällige Eingabe von fehlerhaften Authentifizierungsmerkmalen blockiert.

Gemäß einem weiteren Aspekt der vorliegenden Erfindung weist ein tragbares Kommunikationsgerät eine Aktivierungseinrichtung auf, die, wie oben beschrieben, dazu dient, das tragbare Kommunikationsgerät, insbesondere von einem ausgeschalteten Zustand, in einen Bereitschaftszustand zu überführen, der zur Eingabe eines oder mehrerer Authentifizierungsmerkmale eines Benutzers dient. Ferner weist das tragbare Kommunikationsgerät eine Authentifizierungseinrichtung zum Eingeben des einen oder der mehreren Authentifizierungsmerkmale in einen Zwischenspeicher auf, um das tragbare Kommunikationsgerät in einen Betriebszustand zu bringen, wenn ein korrekter Satz von Authentifizierungsmerkmalen, beispielsweise von der Authentifizierungseinrichtung, in dem Zwischenspeicher erkannt und gegebenenfalls (durch Betätigen einer Bestätigungstaste) bestätigt wird. Außerdem ist eine Zeitmesseinrichtung zum Messen eines Zeitintervalls, das seit der Aktivierung des Bereitschaftszustands verstrichen ist, vorgesehen. Kennzeichen dieses Aspekts der Erfindung ist eine Löscheinrichtung zum Löschen der in dem Zwischenspeicher gespeicherten Authentifizierungsmerkmale, wenn nicht innerhalb eines zweiten vorbestimmten Zeitintervalls ein korrekter Satz von Authentifizierungsmerkmalen in dem Zwischenspeicher erkannt und gegebenenfalls bestätigt wird. Das bedeutet, dass ein tragbares Kommunikationsgerät gemäß dieses Aspekts der Erfindung hauptsächlich dazu dient, eine fehlerhaft bzw. ungewollte Authentifizierung zu verhindern. Wird beispielsweise mittels der Aktivierungseinrichtung das tragbare Kommunikationsgerät in den Bereitschaftszustand gebracht, und werden ferner unbeabsichtigterweise beliebige Authentifizierungsmerkmale, wie beispielsweise Ziffern, Zeichen, Symbole usw. mittels der Authentifizierungseinrichtung in den Zwischenspeicher des tragbaren Kommunikationsgeräts eingegeben, so werden diese eingegebenen Authentifizierungsmerkmale nach dem vorbestimmten zweiten Zeitintervall, das beispielsweise im Bereich von 1 bis 3 Minuten liegt, wieder aus dem Zwischenspeicher gelöscht. Zur besseren Darstellung für den Benutzer des tragbaren Kommunikationsgeräts werden die eingegebenen Authentifizierungsmerkmale im Falle des Vorhandenseins einer Anzeige ebenso aus der Anzeige gelöscht. Werden beispielsweise im Falle einer Authentifizierungseinrichtung, die als eine Tastatur ausgebildet ist, um eine PIN einzugeben, beliebige Ziffern oder Zeichen ungewollt eingegeben, deren Anzahl geringer als die der korrekten PIN ist, so werden Authentifizierungsversuche ferner durch Drücken einer Bestätigungstaste, wie eine "OK"-Taste oder "#"-Taste, mit einer PIN bestehend aus zu wenig Ziffern gewöhnlicherweise nicht als beabsichtigte Fehlauthentifizierungen gewertet, wodurch eine Blockierung des Mobilfunkgeräts nicht ausgelöst wird. Auf diese Weise verhindert das tragbare Kommunikationsgerät gemäß dem zweiten Aspekt der Erfindung ebenso eine Blockierung des Mobilfunkgeräts mit hoher Wahrscheinlichkeit.

Es ist auch denkbar, ein tragbares Kommunikationsgerät als Kombination der ersten beiden dargestellten Aspekte zu schaffen. Dabei ist es möglich, nach Aktivierung des Bereitschaftszustands nach Verstreichen des zweiten vorbestimmten Zeitintervalls ein Löschen des Zwischenspeichers zu veranlassen und nach Verstreichen des ersten Zeitintervalls das tragbare Kommunikationsgerät in einen ausgeschalteten Zustand zu überführen. Weisen gemäß einer vorteilhaften Ausgestaltung das erste und das zweite vorbestimmte Zeitintervall den gleichen Wert auf, so wird nach Verstreichen dieses Zeitintervallwerts sowohl der Zwischenspeicher gelöscht als auch das tragbare Kommunikationsgerät in einen ausgeschalteten Zustand versetzt. Es ist aber auch denkbar, dass das erste vorbestimmte Zeitintervall einen größeren Wert als das zweite vorbestimmte Intervall aufweist, so dass zuerst, d.h. nach Verstreichen des zweiten vorbestimmten Zeitintervalls, der Zwischenspeicher gelöscht wird und dann nach Verstreichen des ersten vorbestimmten Zeitintervalls das tragbare Kommunikationsgerät in einen ausgeschalteten Zustand versetzt wird (für den Fall, dass kein korrekter Satz von Authentifizierungsmerkmalen eingegeben worden ist).

Gemäß einer vorteilhaften Ausgestaltung des tragbaren Kommunikationsgeräts umfasst die Authentifizierungseinrichtung eine Tastatur, mittels der spezifische alphanumerische Zeichen und/oder Symbole als Authentifizierungsmerkmale eingebbar sind. Insbesondere kann die Tastatur dazu dienen, eine PIN (persönliche Identifikations-Nummer) eines Benutzers einzugeben, wie es für tragbare Kommunikationsgeräte in der Ausführung eines Mobilfunkgeräts bzw. Mobiltelefons gemäß dem GSM-Standard herkömmlicherweise der Fall ist. Einer derartige PIN ist dabei einer SIM-Karte zugeordnet, die der Benutzer als Mobilfunkkunde von seinem Netzbetreiber erhält. Entsprechend ist es auch möglich, dass der Benutzer eines tragbaren Kommunikationsgeräts in Form eines Mobilfunkgeräts bzw. Mobiltelefons gemäß dem UMTS (Universal Mobile Telecommunication Service)-Standard einen Authentifizierungscode eingibt, der dessen UICC (Universal Integrated Circuit Card)-Karte bzw. damit verknüpften USIM (UMTS-Subscriber Identity Module)-Anwendung zugeordnet ist.

Gemäß einer weiteren vorteilhaften Ausgestaltung kann die Authentifizierungseinrichtung ferner eine biometrische Sensoranordnung zum Erfassen von biometrischen Merkmalen eines Benutzers als Authentifizierungsmerkmale umfassen. Dabei kann die biometrische Sensoranordnung ein optisches Sensorelement oder ein auf Druck empfindliches Sensorelement aufweisen, das insbesondere zum Erfassen eines Fingerabdrucks eines Benutzers dient.

Neben der Möglichkeit, das tragbare Kommunikationsgerät als ein Mobilfunkgerät bzw. Mobiltelefon auszubilden, ist auch eine Ausgestaltung als (kleiner) tragbarer Computer, insbesondere in der Ausgestaltung eines PDA (Personal Digital Assistant = persönlicher digitaler Assistent) denkbar.

Gemäß einem weiteren Aspekt der vorliegenden Erfindung wird ein Verfahren zum Betreiben eines tragbaren Kommunikationsgeräts geschaffen, das folgende Schritte umfasst, nämlich ein Überführen des tragbaren Kommunikationsgeräts in einen Bereitschaftszustand, der zur Eingabe eines oder mehrerer Authentifizierungsmerkmale eines Benutzers dient; ein Beginnen der Messung eines Zeitintervalls seit einem Aktivieren des Bereitschaftszustands; und ein Versetzen des tragbaren Kommunikationsgeräts in einen ausgeschalteten Zustand, wenn nicht innerhalb eines ersten vorbestimmten gemessenen Zeitintervalls ein korrekter Satz von Authentifizierungsmerkmalen, bestehend aus einem oder mehreren Authentifizierungsmerkmalen, in das tragbare Kommunikationsgerät eingegeben worden ist.

Gemäß einem weiteren Aspekt der Erfindung umfasst ein Verfahren zum Betreiben eines tragbaren Kommunikationsgeräts einen Schritt des Überführens des tragbaren Kommunikationsgeräts in einen Bereitschaftszustand, der zur Eingabe eines oder mehrerer Authentifizierungsmerkmale eines Benutzers dient, und einen Schritt des Beginnens mit der Messung eines Zeitintervalls seit einem Aktivieren des Bereitschaftszustands. Ferner ist das Verfahren dieses Aspekts der Erfindung gekennzeichnet durch einen Schritt des Eingebens des einen oder der mehreren Authentifizierungsmerkmale in einen Zwischenspeicher des tragbaren Kommunikationsgeräts, um das tragbare Kommunikationsgerät in einen Betriebszustand zu bringen, wenn ein korrekter Satz von Authentifizierungsmerkmalen in dem Zwischenspeicher erkannt wird, sowie durch einen Schritt des Löschens der in dem Zwischenspeicher gespeicherten Authentifizierungsmerkmale, wenn nicht innerhalb eines zweiten vorbestimmten Zeitintervalls ein korrekter Satz von Authentifizierungsmerkmalen in dem Zwischenspeicher erkannt wird.

Gemäß einer vorteilhaften Ausgestaltung ist es auch denkbar, die Verfahren der oben erwähnten beiden Aspekte zu kombinieren, indem bei aktiviertem Bereitschaftszustand nach Verstreichen des zweiten vorbestimmten Zeitintervalls die in dem Zwischenspeicher gespeicherten Authentifizierungsmerkmale gelöscht werden, und nach Verstreichen des ersten vorbestimmten Zeitintervalls das Kommunikationsgerät in einen ausgeschalteten Zustand versetzt wird, falls kein korrekter Satz von Authentifizierungsmerkmalen in das Kommunikationsgerät eingegeben worden ist. Dabei kann das erste vorbestimmte Zeitintervall den gleichen Wert wie das zweite vorbestimmte Zeitintervall aufweisen, wobei es insbesondere vorteilhaft ist, wenn das erste vorbestimmte Zeitintervall einen höheren Wert als das zweite vorbestimmte Zeitintervall aufweist.

Bevorzugte Ausführungsformen der vorliegenden Erfindung werden nachfolgend bezugnehmend auf die beiliegenden Zeichnungen näher erläutert.

Es zeigen:
- Fig. 1: eine schematische Darstellung eines Mobiltelefons als tragbares Kommunikationsgerät zur Erläuterung der vorliegenden Erfindung;
- Fig. 2: ein Ablaufdiagramm eines erfindungsgemäßen Verfahrens.

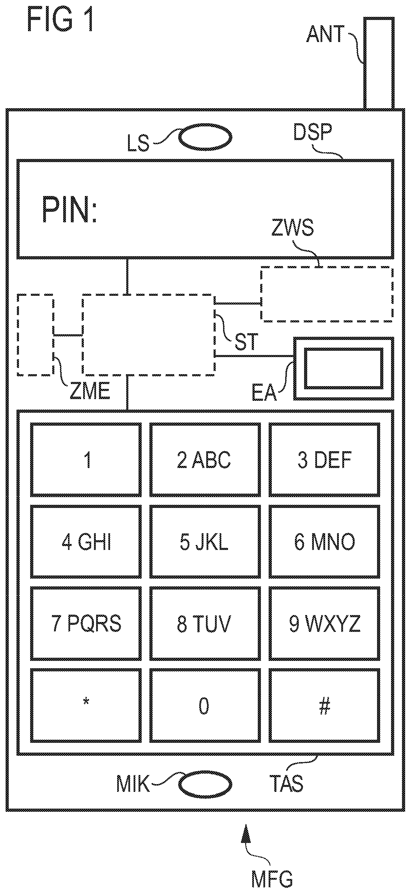

In Figur 1 ist ein Mobiltelefon MFG gezeigt, das als Repräsentation eines tragbaren Kommunikationsgeräts zur Erläuterung der vorliegenden Erfindung dienen soll. Das Mobiltelefon MFG hat eine Steuereinrichtung ST, die insbesondere einen Mikroprozessor und einen Programmspeicher aufweist. Dabei können in dem Programmspeicher Programmcodes enthalten sein, durch deren Abarbeitung mittels der Steuereinrichtung ST die vorliegende Erfindung realisiert wird. Wie es in Figur 1 dargestellt ist, ist die Steuereinrichtung ST mit einer Zeitmesseinrichtung ZME verbunden, die insbesondere zum Messen der Zeit dient, welche nach Aktivieren eines Bereitschaftszustands des Mobiltelefons MFG verstrichen ist. Außerdem ist die Steuereinrichtung ST mit einer Anzeige DSP verbunden, welche beispielsweise als eine LCD (LCD: Liquid Cristal Display = Flüssigkristallanzeige) ausgelegt sein kann und zum Anzeigen von Buchstaben, Ziffern, Symbolen usw. dienen kann. Wie es in Figur 1 dargestellt ist, befindet sich auf der Anzeige gerade die Aufforderung "PIN:", die den Benutzer des Mobiltelefons MFG dazu veranlassen soll, die ihm zugeordnete PIN (persönliche Identitäts-Nummer) einzugeben. Die Steuereinrichtung ST ist ferner mit einem Zwischenspeicher ZWS, beispielsweise in der Ausführung eines Direktzugriffspeichers bzw. RAM-Speichers, verbunden, in dem Ziffern oder Zeichen als Bestandteile einer Benutzerauthentifizierung, wie der PIN, zwischenzeitlich gespeichert werden (zumindest so lange bis durch Drücken einer Bestätigungstaste, wie der "#"-Taste, der von dem Benutzer eingegebene Authentifizierungscode zur Überprüfung durch das Mobiltelefon MFG freigegeben wird). Es sei bemerkt, dass die Steuereinrichtung ST, der Zwischenspeicher ZWS, die Anzeige DSP sowie die Tastatur TAS im Zusammenwirken die Funktion einer Authentifizierungseinrichtung ausüben können. Der korrekte Authentifizierungscode hängt dabei von der mit dem Mobiltelefon MFG verbundenen benutzerspezifischen Identitätskarte, wie der SIM-Karte bei Verwendung eines Mobiltelefons gemäß dem GSM-Standard ab (aus Gründen der besseren Verständlichkeit wird in der folgenden Beschreibung von Authentifizierungscode anstelle eines Satzes von Authentifizierungsmerkmalen bestehend aus einem oder mehreren Authentifizierungsmerkmalen gesprochen). Außerdem ist die Steuereinrichtung ST mit einer Tastatur TAS verbunden. Die Tastatur TAS weist dabei in dieser Ausführungsform zwölf Tasten auf.

Zur Unterscheidung der jeweiligen Tasten sollen diese jeweils in der Form "erstes Zeichen"-Taste bezeichnet werden. Somit weist die Tastatur TAS eine jeweilige 1-Taste, 2-Taste, 3-Taste, 4-Taste, 5-Taste, 6-Taste, 7-Taste, 8-Taste, 9-Taste, *-Taste, 0-Taste und #-Taste auf. Die Steuereinrichtung ST ist ferner mit einer Ein-/Aus-Taste EA verbunden, die einerseits dazu dient, bei ausgeschaltetem Zustand des Mobiltelefons MFG, die Stromzufuhr zu aktivieren und das Mobiltelefon zunächst in einen Bereitschaftszustand zu versetzen, indem ein Authentifizierungscode bzw. die PIN vom Benutzer eingegeben werden kann. Wie bereits bemerkt, ist ein derartiger Bereitschaftszustand bereits in Figur 1 dargestellt, indem auf der Anzeige DSP bereits die Aufforderung "PIN:" zur Eingabe der Benutzer-PIN angezeigt wird. Die Ein-/Aus-Taste EA kann auch dazu dienen, das Mobiltelefon von dem Bereitschaftszustand oder einem Betriebszustand, der unten erläutert werden wird, in den ausgeschalteten Zustand zu versetzen, indem das Mobiltelefon MFG keine Funktionalität mehr aufweist. Es sei bemerkt, dass die Steuereinrichtung ST, die Zeitmesseinrichtung ZME und der Zwischenspeicher ZWS gestrichelt dargestellt sind, da sie normalerweise im Inneren des Mobiltelefons MFG vorgesehen und für den Benutzer nicht sichtbar sind.

Das Mobiltelefon MFG weist ferner ein Mikrofon MIK und einen Lautsprecher LS auf, die beim herkömmlichen Telefonieren (im Betriebszustand), bei dem Sprachsignale übertragen werden, verwendet werden. Ferner weist das Mobiltelefon MFG eine Antenne ANT auf, die mit einem Funkmodul (nicht dargestellt) verbunden ist, das dazu dient, Sprache und/oder Daten über eine Luftschnittstelle an eine Basisstation, die einen Teil eines Kommunikationsnetzes darstellt, zu übertragen bzw. von dieser zu empfangen. Wie bereits erwähnt, können das Mobiltelefon MFG sowie das Kommunikationsnetz einschließlich Basisstation(en) beispielsweise gemäß dem GSM (Global System For Mobile Communications)-Standard oder dem UMTS (Universal Mobile Telecommunication Service)-Standard arbeiten.

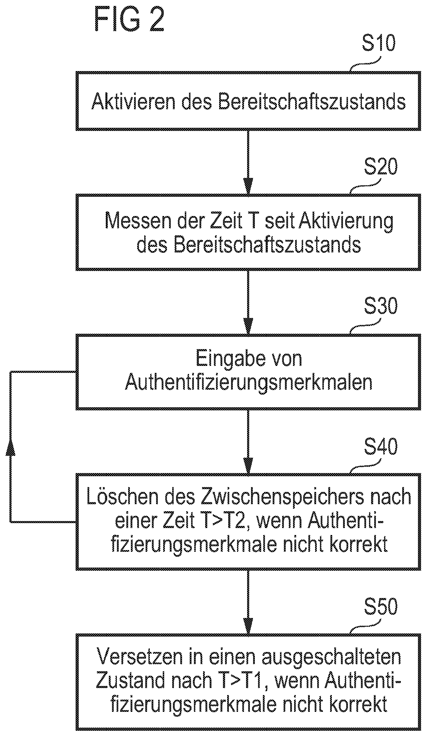

In Figur 2 ist nun ein Ablaufdiagramm gezeigt, das ein Verfahren zum Betreiben des Mobiltelefons MFG darstellt.

Es sei davon ausgegangen, dass sich das Mobiltelefon MFG in einem ausgeschalteten Zustand befindet, in dem die Stromzufuhr zu den wesentlichen Funktionselementen des Mobiltelefons, wie beispielsweise der Tastatur TAS und der Anzeige DSP usw., abgeschaltet ist. Ein Benutzer, der das Mobiltelefon MFG in Betrieb nehmen möchte, betätigt zunächst in Schritt S10 die Ein-/Aus-Taste EA, um das Mobiltelefon MFG in einen Bereitschaftszustand zu versetzen, indem die Stromversorgung aktiviert wird und eine Eingabe eines Authentifizierungscodes bzw. einer PIN durch einen Benutzer über die Tastatur TAS ermöglicht wird. Mit Beginn der Aktivierung des Bereitschaftszustands wird in Schritt S20 in der Zeitmesseinrichtung ZME eine Messung der Zeit T gestartet, die die Zeit angibt, welche seit Aktivierung des Bereitschaftszustands verstrichen ist. Die Messung der Zeit T dient dazu, um nach Verstreichen einer bestimmten Zeit bestimmte Funktionen ausführen zu können, wie es zu den Schritten S40 und S50 beschrieben werden wird. In Schritt S30 wird davon ausgegangen, dass beispielsweise durch unvorteilhafte Unterbringung des Mobiltelefons MFG in einer Tasche des Benutzers ungewollt beliebige Tasten der Tastatur TAS gedrückt werden, so dass beliebige Zeichen in den Zwischenspeicher ZWS eingegeben werden und entsprechend in der Anzeige DSP erscheinen. Es sei jedoch bemerkt, dass es für die Ausführung der folgenden Schritte S40 und S50 nicht erforderlich ist, dass irgendwelche Zeichen oder Ziffern in den Zwischenspeicher ZWS eingegeben worden sind. Es wird jedoch nun davon ausgegangen, dass irgendwelche Zeichen oder Ziffern (durch unvorteilhafte Lagerung) in den Zwischenspeicher ZWS eingegeben worden sind und dass die Zeitmesseinrichtung ZME eine Zeit T gemessen hat, die größer als ein vorbestimmtes Zeitintervall T2 ist. Ferner wird davon ausgegangen, dass der Benutzer zu diesem Zeitpunkt noch keinen korrekten Authentifizierungscode bestehend aus einem oder mehreren Authentifizierungsmerkmalen, wie die PIN, eingegeben und durch eine Bestätigungstaste, wie die #-Taste, zur Überprüfung durch das Mobiltelefon MFG (d.h. insbesondere dessen Steuereinrichtung ST oder allgemein der Authentifizierungseinrichtung) freigegeben hat. In diesem Fall, d.h. wenn gilt T > T2, werden alle bis zu diesem Zeitpunkt in dem Zwischenspeicher eingegebenen Zeichen bzw. Ziffern von der Steuereinrichtung ST aus dem Zwischenspeicher ZWS gelöscht und entsprechend von der Anzeige DSP genommen. Eine derartige Aufgabe, d.h. die des Löschens des Zwischenspeichers ZWS bzw. der Anzeige DSP, kann von der Steuereinrichtung ST mit der Funktion einer Löscheinrichtung ausgeführt werden.

Es wird davon ausgegangen, dass die Zeit T2, die vorteilhafterweise im Bereich von 1 bis 3 Minuten liegt, kürzer als die in Schritt S50 erwähnte Zeit T1 ist, welche im Bereich von 2 bis 6 Minuten liegen kann (es sei bemerkt, dass die Zeitangaben für die Zeiten T1 und T2 beispielhaft sind und je nach Bedarf angepasst werden können). Somit kehrt das Verfahren zum Betreiben des Mobilfunkgeräts von Schritt S40 wieder zu Schritt S30 zurück, indem die Eingabe von Authentifizierungsmerkmalen, d.h. von Zeichen bzw. Ziffern, erwartet wird. Je nachdem, welche Differenz zwischen den Zeiten bzw. Zeitintervallen T1 und T2 besteht, ist es nun möglich, dass beispielsweise nach einer Zeit T > 2 · T2 oder allgemein T > n · T2 (mit n = 1, 2 , 3, ...) Schritt S40 wiederholt durchgeführt wird, um den Zwischenspeicher ZWS zu löschen und anschließend wiederum zu Schritt S30 zu springen, um die Eingabe von Authentifizierungsmerkmalen zu erwarten. Wird schließlich von der Zeitmesseinrichtung ZME eine Zeit T > T1 gemessen, und hat der Benutzer noch keinen korrekten Authentifizierungscode bzw. keine korrekte PIN eingegeben, so wird in Schritt S50 das Mobilfunkgerät abgeschaltet bzw. in einen ausgeschalteten Zustand versetzt. Eine derartige Aufgabe, d.h. die des Ausschaltens bzw. Deaktivierens des Mobilfunkgeräts MFG, kann von der Steuereinrichtung ST mit der Funktion einer Deaktivierungseinrichtung ausgeführt werden. Auf diese Weise wird eine überflüssige Stromzufuhr zu bestimmten Bauteilen des Mobilfunkgeräts, wie zu der Tastatur, der Anzeige, oder einer Beleuchtungseinrichtung zu eben genannten Komponenten, usw., vermieden, und die Betriebszeit des Mobilfunkgeräts MFG verlängert. Ferner wird die Wahrscheinlichkeit verringert, dass durch unvorteilhafte Unterbringung des Mobiltelefons MFG in einer Tasche des Benutzers ungewollt Zeichen oder Ziffern eingegeben werden, die nach Drücken einer Bestätigungstaste, wie der #-Taste, eine fehlerhafte Authentifizierung bewirken, die wiederum zur Blockierung des Mobiltelefons führen kann, welche nur durch die Eingabe eines übergeordneten Authentifizierungscodes, wie der Super-PIN, wieder freigeschaltet werden kann.

Wenn in Schritt S30, in dem die Eingabe des Authentifizierungscodes erwartet wird, der Benutzer des Mobiltelefons MFG den korrekten Authentifizierungscode bzw. die korrekte PIN eingibt, so wird das Mobiltelefon in einen Betriebszustand versetzt, in dem die herkömmlichen Leistungsmerkmale des Mobiltelefons, wie das Telefonieren usw., dem Benutzer ermöglicht werden. Beim Übergang von dem Bereitschaftszustand in den Betriebszustand, d.h. nach Eingabe der korrekten PIN, wird die Zeitmessung der Zeitmesseinrichtung ZME gestoppt, so dass während des Betriebszustands keine zeitlimitierte Abschaltung des Mobiltelefons MFG wie im Bereitschaftszustand erfolgt.

Es sei bemerkt, dass gemäß einer Ausgestaltung der in Figur 2 gezeigten Ausführungsform der Schritt S40 weggelassen werden kann, so dass das Mobiltelefon MFG direkt nach Überschreiten eines Zeitintervalls T1 in einen ausgeschalteten Zustand versetzt wird. Ebenfalls ist es gemäß einer weiteren Ausgestaltung des in Figur 2 dargestellten Verfahrens möglich, dass der Schritt S50 weggelassen wird, so dass während des Bereitschaftszustands keine automatische Abschaltung des Mobiltelefons erfolgt, sondern nur in bestimmten Zeitintervallen (T2) eine Löschung des Zwischenspeichers bzw. der Anzeige stattfindet, um einen fehlerhaften Authentifizierungsversuch zu vermeiden.

Gemäß einer weiteren Ausgestaltung des in Figur 2 gezeigten Verfahrens ist es auch denkbar, dass anstelle der Tastatur TAS zur Eingabe einer PIN als Satz von Authentifizierungsmerkmalen bzw. als Authentifizierungscode eine Sensoranordnung am Mobiltelefon MFG angeordnet sein kann, mittels der biometrische Merkmale, wie ein Fingerabdruck, erfassbar sind.

Es sei bemerkt, dass ein erfindungsgemäßes tragbares Kommunikationsgerät nicht auf Mobilfunkgeräte bzw. Mobiltelefone oder Schnurlostelefone beschränkt ist, sondern auch beispielsweise in der Form eines (kleinen) tragbaren Computers, wie eines Organizers oder PDA (Personal Digital Assistant = persönlicher digitaler Assistent), ausgebildet sein kann.

## Patentansprüche

1. Tragbares Kommunikationsgerät mit folgenden Merkmalen:
einer Aktivierungseinrichtung (EA) zum Überführen des tragbaren Kommunikationsgeräts in einen Bereitschaftszustand, der zur Eingabe eines oder mehrerer Authentifizierungsmerkmale eines Benutzers dient;
einer Authentifizierungseinrichtung (TAS, ST, DSP, ZWS) zum Eingeben des einen oder der mehreren Authentifizierungsmerkmale, um das tragbare Kommunikationsgerät (MFG) nach Erkennen eines korrekten Satzes von Authentifizierungsmerkmalen in einen Betriebszustand zu bringen;
**gekennzeichnet durch**
eine Zeitmesseinrichtung (ZME) zum Messen eines Zeitintervalls (T), das seit der Aktivierung des Bereitschaftszustands verstrichen ist;
eine Deaktivierungseinrichtung (ST) zum Versetzen des tragbaren Kommunikationsgeräts in einen ausgeschalteten Zustand, wenn nicht innerhalb eines ersten vorbestimmten Zeitintervalls (T1) ein korrekter Satz von Authentifizierungsmerkmalen erkannt worden ist.

2. Tragbares Kommunikationsgerät, insbesondere nach Anspruch 1, mit folgenden Merkmalen:
einer Aktivierungseinrichtung (EA) zum Überführen des tragbaren Kommunikationsgeräts in einen Bereitschaftszustand, der zur Eingabe eines oder mehrerer Authentifizierungsmerkmale eines Benutzers dient;
einer Authentifizierungseinrichtung (TAS, ST, DSP, ZWS) zum Eingeben des einen oder der mehreren Authentifizierungsmerkmale in einen Zwischenspeicher (ZWS), um das tragbare Kommunikationsgerät (MFG) nach Erkennen eines korrekten Satzes von Authentifizierungsmerkmalen in dem Zwischenspeicher in einen Betriebszustand zu bringen;
**gekennzeichnet durch**
einer Zeitmesseinrichtung (ZME) zum Messen eines Zeitintervalls, das seit der Aktivierung des Bereitschaftszustands verstrichen ist;
einer Löscheinrichtung (ST) zum Löschen der in dem Zwischenspeicher gespeicherten Authentifizierungsmerkmale, wenn nicht innerhalb eines zweiten vorbestimmten Zeitintervalls (T2) ein korrekter Satz von Authentifizierungsmerkmalen in dem Zwischenspeicher erkannt worden ist.

3. Tragbares Kommunikationsgerät mit folgenden Merkmalen,
einer Aktivierungseinrichtung (EA) zum Überführen des tragbaren Kommunikationsgeräts in einen Bereitschaftszustand, der zur Eingabe eines oder mehrerer Authentifizierungsmerkmale eines Benutzers dient;
einer Authentifizierungseinrichtung (TAS, ST, DSP, ZWS) zum Eingeben des einen oder der mehreren Authentifizierungsmerkmale, um das tragbare Kommunikationsgerät (MFG) nach Erkennen eines korrekten Satzes von Authentifizierungsmerkmalen in einen Betriebszustand zu bringen;
**gekennzeichnet durch**
eine Zeitmesseinrichtung (ZME) zum Messen eines Zeitintervalls (T), das seit der Aktivierung des Bereitschaftszustands verstrichen ist;
eine Deaktivierungseinrichtung (ST) zum Versetzen des tragbaren Kommunikationsgeräts in einen ausgeschalteten Zustand, wenn nicht innerhalb eines ersten vorbestimmten Zeitintervalls (T1) ein korrekter Satz von Authentifizierungsmerkmalen erkannt worden ist, einer Löscheinrichtung (ST) zum Löschen der in dem Zwischenspeicher gespeicherten Authentifizierungsmerkmale, wenn nicht innerhalb eines zweiten vorbestimmten Zeitintervalls (T2) ein korrekter Satz von Authentifizierungsmerkmalen in dem Zwischenspeicher erkannt worden ist,
wobei das erste vorbestimmte Zeitintervall (T1) einen grösseren Wert als das zweite vorbestimmte Zeitintervall (T2) aufweist.

4. Tragbares Kommunikationsgerät nach Anspruch 1 oder 2, bei dem das erste vorbestimmte Zeitintervall (T1) einen grösseren Wert als das zweite vorbestimmte Zeitintervall (T2) aufweist.

5. Tragbares Kommunikationsgerät nach Anspruch 1 und 2, bei dem das erste (T1) und das zweite (T2) vorbestimmte Zeitintervall den gleichen Wert aufweisen.

6. Tragbares Kommunikationsgerät nach einem der Ansprüche 1 bis 5, bei dem die Authentifizierungseinrichtung (TAS, ST, DSP, ZWS) eine Tastatur (TAS) umfasst, mittels der spezifische alphanumerische Zeichen und/oder Symbole als Authentifizierungsmerkmale eingebar sind.

7. Tragbares Kommunikationsgerät nach einem der Ansprüche 1 bis 5, bei dem die Authentifizierungseinrichtung (TAS, ST, DSP, ZWS) eine biometrische Sensoranordnung zum Erfassen von biometrischen Merkmalen eines Benutzers als Authentifizierungsmerkmale umfasst.

8. Tragbares Kommunikationsgerät nach Anspruch 7, bei dem die biometrische Sensoranordnung ein Sensorelement zum Erfassen eines Fingerabdrucks eines Benutzers umfasst.

9. Tragbares Kommunikationsgerät nach einem der Ansprüche 1 bis 8, bei dem das erste vorbestimmte Zeitintervall (T1) im Bereich von 2 bis 6 Minuten und das zweite vorbestimmte Zeitintervall (T2) im Bereich von 1 bis 3 Minuten liegt.

10. Tragbares Kommunikationsgerät nach einem der Ansprüche 1 bis 9, das als ein Mobilfunkgerät (MFG) oder ein tragbarer Computer ausgebildet ist.

11. Tragbares Kommunikationsgerät nach Anspruch 10, das als ein gemäß dem GSM- oder UMTS-Standard arbeitendes Mobilfunkgerät ausgebildet ist.

12. Verfahren zum Betreiben eines tragbaren Kommunikationsgeräts mit folgenden Schritten:
Überführen des tragbaren Kommunikationsgeräts in einen Bereitschaftszustand (S10), der zur Eingabe eines oder mehrerer Authentifizierungsmerkmale eines Benutzers dient; Beginnen der Messung eines Zeitintervalls seit einem Aktivieren des Bereitschaftszustands (S20);
Versetzen des tragbaren Kommunikationsgeräts in einen ausgeschalteten Zustand (S50), wenn nicht innerhalb eines ersten vorbestimmten gemessenen Zeitintervalls (T1) ein korrekter Satz von Authentifizierungsmerkmalen bestehend aus einem oder mehreren Authentifizierungsmerkmalen in das tragbare Kommunikationsgerät eingegeben worden ist.

13. Verfahren zum Betreiben eines tragbaren Kommunikationsgeräts, insbesondere nach Anspruch 11, mit folgenden Schritten:
Überführen des tragbaren Kommunikationsgeräts in einen Bereitschaftszustand (S10), der zur Eingabe eines oder mehrerer Authentifizierungsmerkmale eines Benutzers dient;
Beginnen der Messung eines Zeitintervalls seit einem Aktivieren des Bereitschaftszustands (S20);
Eingeben des einen oder der mehreren Authentifizierungsmerkmale in einen Zwischenspeicher des tragbaren Kommunikationsgeräts (S30), um das tragbare Kommunikationsgerät in einen Betriebszustand zu bringen, wenn ein korrekter Satz von Authentifizierungsmerkmalen in dem Zwischenspeicher erkannt wird;
Löschen der in dem Zwischenspeicher gespeicherten Authentifizierungsmerkmale (S40), wenn nicht innerhalb eines zweiten vorbestimmten Zeitintervalls (T2) ein korrekter Satz von Authentifizierungsmerkmalen in dem Zwischenspeicher erkannt wird.

14. Verfahren zum Betreiben eines tragbaren Kommunikationsgeräts mit folgenden Schritten:
Überfuhren des tragbaren Kommunikationsgeräts in einen Bereitschaftszustand (S10), der zur Eingabe eines oder mehrerer Authentifizierungsmerkmale eines Benutzers dient;
Beginnen der Messung eines Zeitintervalls seit einem Aktivieren des Bereitschaftszustands (S20);
Löschen der in dem Zwischenspeicher gespeicherten Authentifizierungsmerkmale (S40), wenn nicht innerhalb eines zweiten vorbestimmten Zeitintervalls (T2) ein korrekter Satz von Authentifizierungsmerkmalen in dem Zwischenspeicher erkannt wird;
Versetzen des tragbaren Kommunikationsgeräts in einen ausgeschalteten Zustand (S50), wenn nicht innerhalb eines ersten vorbestimmten gemessenen Zeitintervalls (T1) ein korrekter Satz von Authentifizierungsmerkmalen bestehend aus einem oder mehreren Authentifizierungsmerkmalen in das tragbare Kommunikationsgerät eingegeben worden ist;
wobei das erste vorbestimmte Zeitintervall (T1) einen grösseren Wert als das zweite vorbestimmte Zeitintervall (T2) aufweist.

## Claims

1. A portable communication device comprising the following features:
an activating device (EA) for transferring the portable communication device to a standby state which serves for inputting one or more authentication features of a user;
an authentication device (TAS, ST, DSP, ZWS) for inputting the one or more authentication features in order to bring the portable communication device (MFG) to an operating state after identifying a correct set of authentication features;
**characterized by**
a time measuring device (ZME) for measuring a time interval (T) elapsed since activation of the standby state;
a deactivating device (ST) for setting the portable communication device to a disabled state unless a correct set of authentication features has been identified within a first predetermined time interval (T1).

2. A portable communication device, especially according to claim 1, comprising the following features:
an activating device (EA) for transferring the portable communication device to a standby state which serves for inputting one or more authentication features of a user;
an authentication device (TAS, ST, DSP, ZWS) for inputting the one or more authentication features into a buffer (ZWS) in order to bring the portable communication device (MFG) to an operating state after identifying a correct set of authentication features in the buffer;
**characterized by**
a time measuring device (ZME) for measuring a time interval elapsed since activation of the standby state;
a deleting device (ST) for deleting the authentication features stored in the buffer unless a correct set of authentication features has been identified in the buffer within a second predetermined time interval (T2).

3. A portable communication device, comprising the following features:
an activating device (EA) for transferring the portable communication device to a standby state which serves for inputting one or more authentication features of a user;
an authentication device (TAS, ST, DSP, ZWS) for inputting the one or more authentication features in order to bring the portable communication device (MFG) to an operating state after identifying a correct set of authentication features;
**characterized by**
a time measuring device (ZME) for measuring a time interval (T) elapsed since activation of the standby state;
a deactivating device (ST) for setting the portable communication device to a disabled state unless a correct set of authentication features has been identified within a first predetermined time interval (T1);
a deleting device (ST) for deleting the authentication features stored in the buffer unless a correct set of authentication features has been identified in the buffer within a second predetermined time interval (T2),
wherein the first predetermined time interval (T1) has a greater value than the second predetermined time interval (T2).

4. The portable communication device according to claim 1 or 2, wherein the first predetermined time interval (T1) has a greater value than the second predetermined time interval (T2).

5. The portable communication device according to claims 1 and 2, wherein the first (T1) and second (T2) predetermined time intervals have the same value.

6. The portable communication device according to any one of claims 1 to 5, wherein the authentication device (TAS, ST, DSP, ZWS) comprises a keyboard (TAS), by means of which specific alphanumeric characters and/or symbols can be input as authentication features.

7. The portable communication device according to any one of claims 1 to 5, wherein the authentication device (TAS, ST, DSP, ZWS) comprises a biometric sensor arrangement for detecting biometric features of a user as authentication features.

8. The portable communication device according to claim 7, wherein the biometric sensor arrangement comprises a sensor element for detecting a fingerprint of a user.

9. The portable communication device according to any one of claims 1 to 8, wherein the first predetermined time interval (T1) is within the range of 2 to 6 minutes and the second predetermined time interval (T2) is within the range of 1 to 3 minutes.

10. The portable communication device according to any one of claims 1 to 9, which is configured as a mobile radio device (MFG) or a portable computer.

11. The portable communication device according to claim 10, which is configured as a mobile radio device operating in accordance with the GSM or UMTS standard.

12. A method for operating a portable communication device comprising the following steps:
transferring the portable communication device to a standby state (S10) which serves for inputting one or more authentication features of a user;
beginning the measurement (S20) of a time interval since activation of the standby state;
setting the portable communication device to a disabled state (S50) unless a correct set of authentication features consisting of one or more authentication features has been input into the portable communication device within a first predetermined measured time interval (T1).

13. A method for operating a portable communication device, especially according to claim 11, comprising the following steps:
transferring the portable communication device to a standby state (S10) which serves for inputting one or more authentication features of a user;
beginning the measurement of a time interval since activation of the standby state (S20);
inputting the one or more authentication features into a buffer of the portable communication device (S30) in order to bring the portable communication device to an operating state when a correct set of authentication features is identified in the buffer;
deleting the authentication features stored in the buffer (S40) unless a correct set of authentication features is identified in the buffer within a second predetermined time interval (T2).

14. A method for operating a portable communication device, comprising the following steps:
transferring the portable communication device to a standby state (S10) which serves for inputting one or more authentication features of a user;
beginning the measurement (S20) of a time interval since activation of the standby state;
deleting the authentication features stored in the buffer (S40) unless a correct set of authentication features is identified in the buffer within a second predetermined time interval (T2);
setting the portable communication device to a disabled state (S50) unless a correct set of authentication features consisting of one or more authentication features has been input into the portable communication device within a first predetermined time interval (T1);
wherein the first predetermined time interval (T1) has a greater value than the second predetermined time interval (T2).

## Revendications

1. Un dispositif de communication portatif comprenant les caractéristiques suivantes :
un dispositif d'activation (EA) destiné au transfert du dispositif de communication portatif vers un état en attente qui sert à l'entrée d'une ou de plusieurs caractéristiques d'authentification d'un utilisateur,
un dispositif d'authentification (TAS, ST, DSP, ZWS) destiné à l'entrée des une ou plusieurs caractéristiques d'authentification afin de placer le dispositif de communication portatif (MFG) dans un état opérationnel après l'identification d'un ensemble correct de caractéristiques d'authentification,
**caractérisé par**
un dispositif de mesure de temps (ZME) destiné à la mesure d'un intervalle temporel (T) écoulé depuis l'activation de l'état en attente,
un dispositif de désactivation (ST) destiné au placement du dispositif de communication portatif dans un état désactivé sauf si un ensemble correct de caractéristiques d'authentification a été identifié à l'intérieur d'un premier intervalle temporel prédéterminé (T1).

2. Un dispositif de communication portatif, en particulier selon la Revendication 1, comprenant les caractéristiques suivantes :
un dispositif d'activation (EA) destiné au transfert du dispositif de communication portatif vers un état en attente qui sert à l'entrée d'une ou de plusieurs caractéristiques d'authentification d'un utilisateur,
un dispositif d'authentification (TAS, ST, DSP, ZWS) destiné à l'entrée des une ou plusieurs caractéristiques d'authentification dans une mémoire tampon (ZWS) afin de placer le dispositif de communication portatif (MFG) dans un état opérationnel après l'identification d'un ensemble correct de caractéristiques d'authentification dans la mémoire tampon,
**caractérisé par**
un dispositif de mesure de temps (ZME) destiné à la mesure d'un intervalle temporel écoulé depuis l'activation de l'état en attente,
un dispositif de suppression (ST) destiné à la suppression des caractéristiques d'authentification conservées en mémoire dans la mémoire tampon sauf si un ensemble correct de caractéristiques d'authentification a été identifié dans la mémoire tampon à l'intérieur d'un deuxième intervalle temporel prédéterminé (T2).

3. Un dispositif de communication portatif, comprenant les caractéristiques suivantes :
un dispositif d'activation (EA) destiné au transfert du dispositif de communication portatif vers un état en attente qui sert à l'entrée d'une ou de plusieurs caractéristiques d'authentification d'un utilisateur,
un dispositif d'authentification (TAS, ST, DSP, ZWS) destiné à l'entrée des une ou plusieurs caractéristiques d'authentification afin de placer le dispositif de communication portatif (MFG) dans un état opérationnel après l'identification d'un ensemble correct de caractéristiques d'authentification,
**caractérisé par**
un dispositif de mesure de temps (ZME) destiné à la mesure d'un intervalle temporel (T) écoulé depuis l'activation de l'état en attente,
un dispositif de désactivation (ST) destiné au placement du dispositif de communication portatif dans un état désactivé sauf si un ensemble correct de caractéristiques d'authentification a été identifié à l'intérieur d'un premier intervalle temporel prédéterminé (T1),
un dispositif de suppression (ST) destiné à la suppression des caractéristiques d'authentification conservées en mémoire dans la mémoire tampon sauf si un ensemble correct de caractéristiques d'authentification a été identifié dans la mémoire tampon à l'intérieur d'un deuxième intervalle temporel prédéterminé (T2),
où le premier intervalle temporel prédéterminé (T1) possède une valeur supérieure au deuxième intervalle temporel prédéterminé (T2).

4. Le dispositif de communication portatif selon la Revendication 1 ou 2, où le premier intervalle temporel prédéterminé (T1) possède une valeur supérieure au deuxième intervalle temporel prédéterminé (T2).

5. Le dispositif de communication portatif selon les Revendications 1 et 2, où les premier (T1) et deuxième (T2) intervalles temporels prédéterminés possèdent la même valeur.

6. Le dispositif de communication portatif selon l'une quelconque des Revendications 1 à 5, où le dispositif d'authentification (TAS, ST, DSP, ZWS) comprend un clavier (TAS) au moyen duquel des caractères alphanumériques et/ou des symboles spécifiques peuvent être entrés en tant que caractéristiques d'authentification.

7. Le dispositif de communication portatif selon l'une quelconque des Revendications 1 à 5, où le dispositif d'authentification (TAS, ST, DSP, ZWS) comprend un agencement de capteur biométrique destiné à la détection de caractéristiques biométriques d'un utilisateur en tant que caractéristiques d'authentification.

8. Le dispositif de communication portatif selon la Revendication 7, où l'agencement de capteur biométrique comprend un élément capteur destiné à la détection d'une empreinte digitale d'un utilisateur.

9. Le dispositif de communication portatif selon l'une quelconque des Revendications 1 à 8, où le premier intervalle temporel prédéterminé (T1) se situe à l'intérieur de la plage de 2 à 6 minutes et le deuxième intervalle temporel prédéterminé (T2) se situe à l'intérieur de la plage de 1 à 3 minutes.

10. Le dispositif de communication portatif selon l'une quelconque des Revendications 1 à 9, qui est configuré sous la forme d'un dispositif radio mobile (MFG) ou d'un ordinateur portatif.

11. Le dispositif de communication portatif selon la Revendication 10, qui est configuré sous la forme d'un dispositif radio mobile fonctionnant selon la norme GSM ou UMTS.

12. Un procédé d'exploitation d'un dispositif de communication portatif comprenant les opérations suivantes :
le transfert du dispositif de communication portatif vers un état en attente (S10) qui sert à l'entrée d'une ou de plusieurs caractéristiques d'authentification d'un utilisateur,
le démarrage de la mesure (S20) d'un intervalle temporel depuis l'activation de l'état en attente,
le placement du dispositif de communication portatif dans un état désactivé (S50) sauf si un ensemble correct de caractéristiques d'authentification se composant d'une ou de plusieurs caractéristiques d'authentification a été entré dans le dispositif de communication portatif à l'intérieur d'un premier intervalle temporel mesuré prédéterminé (T1).

13. Un procédé d'exploitation d'un dispositif de communication portatif, en particulier selon la Revendication 11, comprenant les opérations suivantes :
le transfert du dispositif de communication portatif vers un état en attente (S10) qui sert à l'entrée d'une ou de plusieurs caractéristiques d'authentification d'un utilisateur,
le démarrage de la mesure d'un intervalle temporel depuis l'activation de l'état en attente (S20),
l'entrée des une ou plusieurs caractéristiques d'authentification dans une mémoire tampon du dispositif de communication portatif (S30) afin de placer le dispositif de communication portatif dans un état opérationnel lorsqu'un ensemble correct de caractéristiques d'authentification est identifié dans la mémoire tampon,
la suppression des caractéristiques d'authentification conservées en mémoire dans la mémoire tampon (S40) sauf si un ensemble correct de caractéristiques d'authentification est identifié dans la mémoire tampon à l'intérieur d'un deuxième intervalle temporel prédéterminé (T2).

14. Un procédé d'exploitation d'un dispositif de communication portatif, comprenant les opérations suivantes :
le transfert du dispositif de communication portatif vers un état en attente (S10) qui sert à l'entrée d'une ou de plusieurs caractéristiques d'authentification d'un utilisateur,
le démarrage de la mesure (S20) d'un intervalle temporel depuis l'activation de l'état en attente,
la suppression des caractéristiques d'authentification conservées en mémoire dans la mémoire tampon (S40) sauf si un ensemble correct de caractéristiques d'authentification est identifié dans la mémoire tampon à l'intérieur d'un deuxième intervalle temporel prédéterminé (T2),
le placement du dispositif de communication portatif dans un état désactivé (S50) sauf si un ensemble correct de caractéristiques d'authentification se composant d'une ou de plusieurs caractéristiques d'authentification a été entré dans le dispositif de communication portatif à l'intérieur d'un premier intervalle temporel prédéterminé (T1),
où le premier intervalle temporel prédéterminé (T1) possède une valeur supérieure au deuxième intervalle temporel prédéterminé (T2).
